# EUROPEAN PATENT SPECIFICATION

(11) **EP 3 417 519 B1**
(45) Date of publication and mention of the grant of the patent: **01.07.2020**
(21) Application number: 16705769.4
(22) Date of filing: 18.02.2016
(51) Int. Cl.: H01H 9/52, H02B 1/56

(54) **DUAL-PIPE SYSTEM FOR COOLING HIGH-VOLTAGE SYSTEMS**
DOPPELROHRSYSTEM ZUM KÜHLEN VON HOCHSPANNUNGSANLAGEN
SYSTÈME À DOUBLE TUYAU DE REFROIDISSEMENT DE SYSTÈMES HAUTE TENSION

(43) Date of publication of application: 26.12.2018
(73) Proprietor: ABB Power Grids Switzerland AG, 5400 Baden (CH)
(72) Inventor: RUSSBERG, Gunnar, 724 62 Västerås (SE)
(74) Representative: Kransell & Wennborg KB
(86) International application number: PCT/EP2016/053465
(87) International publication number: WO 2017/140369

(56) References cited:
- WO-A1-2013/139666
- US-A- 2 992 290
- US-A1- 2003 094 266

## Description

### Technical field

The present disclosure relates to the field of high-voltage systems. In particular, the present disclosure relates to gas-insulated high-voltage systems and the cooling of such systems.

### Technical background

High-voltage systems often include electrical devices such as e.g. transformers, circuit breakers, switchgear or converters. When designing such a system, taking into account how to achieve proper electrical insulation between the active components of these devices is important and may often present a challenge for the designer of the systems. To prevent, or at least lessen, the occurrence of e.g. arcs between high-voltage active components, the design rules often involves that components are spaced apart as far as possible (and e.g. to use ambient air between the components as an insulating medium).

Sometimes, space restrictions apply and alternative solutions may be required. Instead of using surrounding (ambient) air as insulating medium, the surrounding air may be replaced with another gas having better dielectric and insulating properties, such as e.g. sulfur hexafluoride (SF₆). Placing active components inside a closed container together with the insulation gas (often kept under several bars of pressure) provides a confined system having a reduced size and sufficient electrical insulation.

International application WO 2013 / 139666 A1 describes a cooling apparatus comprising a busbar tube structure with at least two separated channels.

However, during operation, high-voltage systems may generate heat (in particular from the electrical devices). A general challenge in the field of high-voltage systems, and in particular for confined systems, is to guarantee proper operation even when the electrical devices generate heat.

### Summary of the invention

An object of the present disclosure is therefore to at least partially fulfill the above requirements. To achieve this, a high-voltage system is provided.

This and other objects are achieved by means of a high-voltage system and a method as defined in the appended independent claims. Other embodiments are defined by the dependent claims.

According to one aspect of the present disclosure, the system I comprises a container for enclosing an electrically insulating gas, an electrical device arranged within the container, and a cooling medium conveyor arranged at least partially within the container. The conveyor comprises a first pipe for conveying a liquid cooling medium. The conveyor I also comprised second pipe disposed around the first pipe such that a channel for containing a ventilating gas is formed between an outside of the first pipe and an inside of the second pipe. The conveyor **is arranged** in thermal contact with the electrical device.

In the present aspect, the container allows for a (high-voltage) electrical device placed therein to be surrounded by the insulating gas, and to thereby provide electrical insulation between the device and other devices (or ground). If an electrical device is not entirely sealed, the insulating gas may also provide insulation between the internal components of such a device.

The cooling medium conveyor allows for liquid cooling-medium (such as e.g. water) to be conveyed to (and/or from) an electrical device through the first pipe. Since the conveyor is arranged in thermal contact with the electrical device, heat generated from or at the electrical device may efficiently be transferred away from the electrical device by the liquid cooling medium and be used or dissipated elsewhere (e.g. in a heat-exchanger in contact with an outside of the container, and/or in contact with ambient air surrounding the container).The electrical device may thereby be cooled in an improved (and possibly sufficient) way. Cooling methods such as conventional convective and forced gas cooling may require too voluminous flows and/or too bulky connections through a container wall to be practically applicable in a confined high-voltage system having a reduced size. The present disclosure may offer cooling to be performed with improved (and possibly sufficient) capacity, by using a liquid cooling-medium, also for such systems.

Due to material incompatibilities between the liquid cooling medium (e.g. water) and the insulating gas (e.g. SF₆), cooling of a gas-insulated high-voltage system is not straightforward. The presence of the insulating gas may present a serious issue in the case of a leak in that, upon contact between e.g. water and SF₆, the dielectric (and insulating) properties of the gas may be degraded. Such degradation may reduce the electrical insulation offered by the insulating gas, and may in a worst-case scenario result in overheating, fire or worse. In addition, contact between the two materials (e.g. water and insulating gas) may give rise to a formation of aggressive chemical compounds that may damage piping arrangements, the electrical device or other parts of the system.

With the cooling medium conveyor including a second pipe disposed around the first pipe (i.e., a "double pipe" arrangement), the present disclosure allows for an eventual leakage or diffusion of e.g. water from/through the first pipe to be captured and confined within the channel (formed between the outside of the first pipe and the inside of the second pipe), before the liquid cooling medium has the chance to come into contact with the surrounding insulating gas. Moderate leaks may be handled in that the leaked liquid cooling medium may be absorbed by a ventilating gas confined in the ventilation space, and/or be captured and contained by the second pipe, and transported away elsewhere where it e.g. may be dissipated or by other means taken care of (by e.g. a device or arrangement suitable therefore).

As a result of the above listed features, the present disclosure offers at least the benefit of using a liquid cooling medium (e.g. water) in order to provide an improved (and possibly sufficiently) cooling of high-voltage electrical devices also when they are surrounded by an insulating gas and located inside a confined high-voltage system having a reduced size. This is achieved by eliminating, or at least reducing, the risk of the liquid cooling medium coming into contact with the insulating gas. Even larger sudden leaks of cooling medium (such as e.g. caused by an erupting primary pipe) may be at least temporarily contained, and time to emergency measures and damage control, not possible otherwise, may be given. The barrier provided by the second pipe may, in addition to the above and an increased overall safety, also result in that requirements on e.g. wall thickness and material quality of the first pipe may be relaxed (which in turn may lead to e.g. reduced material costs).

In one embodiment of the present disclosure, the cooling medium conveyor may further include a spacer arrangement between the first pipe and the second pipe. In some embodiments, the spacer arrangement may partition at least part of the channel into at least two subchannels. In one embodiment of the present disclosure, the system may comprise a fan that is arranged to cause circulation of a ventilating gas contained within the channel.

In one embodiment of the present disclosure, the fan and the cooling medium conveyor may be arranged such that the circulation of the ventilating gas is unidirectional.

In one embodiment of the present disclosure, the cooling medium conveyor and the fan may be arranged such that the ventilating gas in two of the at least two subchannels is circulated in opposite directions.

In one embodiment of the present disclosure, the system may further comprise a humidity measurement system configured to measure a humidity value within the channel and output a signal indicative of said humidity value.

In one embodiment of the present disclosure, the system may further comprise a moisture removal system configured to remove moisture from the channel.

In one embodiment of the present disclosure, the signal indicative of the humidity value may be output to the moisture removal system. The moisture removal system may be configured to start removing moisture in the event that the humidity value exceeds a threshold value.

In one embodiment of the present disclosure, the cooling medium conveyor may be arranged to transfer the heat to the outside of the container.

In one embodiment of the present disclosure, the electrical device may be a high-voltage electrical device.

In one embodiment of the present disclosure, the first pipe and the second pipe may be coaxial.

In one embodiment of the present disclosure, the electrical device may be one of a transformer, a circuit breaker, a switchgear, or a converter.

In one embodiment of the present disclosure, the first pipe, the second pipe and the spacer arrangement may be formed as one part.

According to one aspect of the present disclosure, a method for cooling an electrical device that is arranged within a container, wherein the container encloses an electrically insulating gas, is provided. The method may comprise arranging, at least partially within the container, a cooling medium conveyor comprising a first pipe and a second pipe, wherein the second pipe is disposed around the first pipe such that a channel is formed between an outside of the first pipe and an inside of the second pipe. The method may also comprise providing a ventilating gas within the channel, and causing a liquid cooling medium to flow within the first pipe to transfer heat away from the electrical device.

In one embodiment of the present disclosure, the ventilating gas and the electrically insulating gas may be of a same type. In particular, the ventilating gas and the insulating gas may be equivalent (i.e. the same gas from a chemical point of view).

The present disclosure relates to all possible combinations of features mentioned herein, including the ones listed above as well as other features which will be described in what follows with reference to different embodiments. Any embodiment described herein may be combinable with other embodiments also described herein, and the present disclosure relates also to all such combinations.

### Brief description of the drawings

The above, as well as additional objects, features and advantages of the inventive high-voltage system, will be better understood through the following illustrative and non-limiting detailed description of embodiments. Reference is made to the appended drawings, in which:
Figure 1a is a schematic illustration of a system according to one or more embodiments of the present disclosure;
Figure 1b is a schematic illustration of a system according to one or more embodiments of the present disclosure;
Figure 2a is a top-view perspective of a section of a cooling medium conveyor according to one or more embodiments of the present disclosure;
Figures 2b and 2c are cross-sectional views of cooling medium conveyors according to one or more embodiments of the present disclosure; and
Figures 3a, 3b and 3c are schematic illustrations of fittings according to one or more embodiments of the present disclosure not part of the invention.

In the drawings, like reference numerals will be used for like elements unless stated otherwise. Unless explicitly stated to the contrary, the drawings show only such elements that are necessary to illustrate the example embodiments, while other elements, in the interest of clarity may be omitted or merely suggested.

### Detailed description

Exemplifying embodiments will now be described more fully hereinafter with reference to the accompanying drawings. The drawings show currently preferred embodiments, but the invention may, however, be embodied in many different forms and should not be construed as limited to the embodiments set forth herein; rather, these embodiments are provided for thoroughness and completeness, and fully convey the scope of the invention to the skilled person.

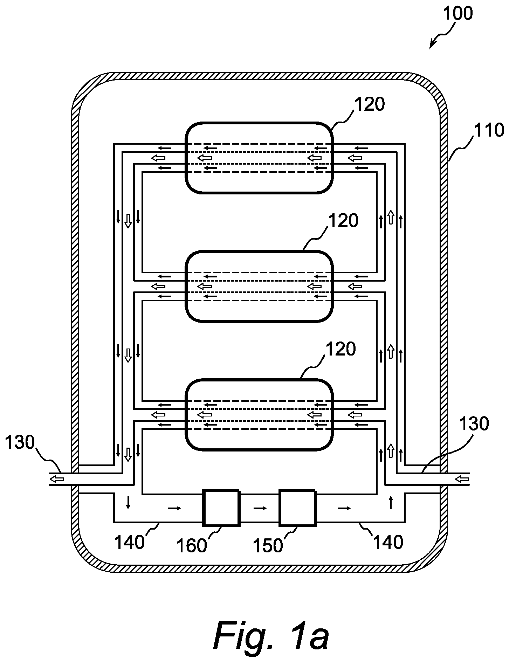

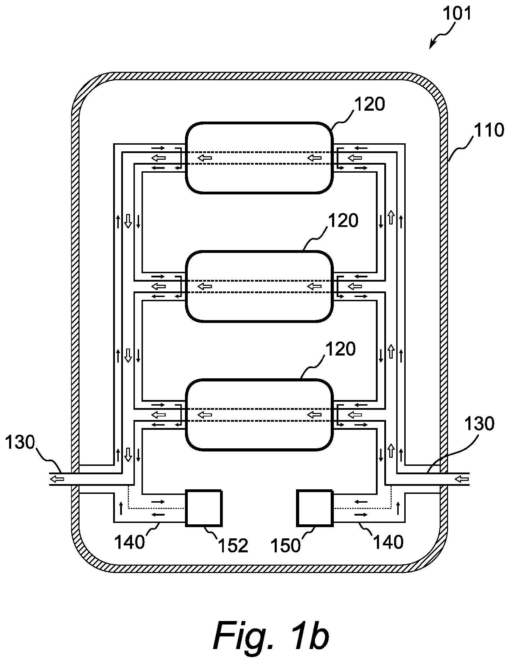

Some embodiments of systems according to the present disclosure will now be described with reference to figures 1a and 1b.

Figure 1a illustrates a system 100 that includes a container 110. The container 110 is adapted to enclose an electrically insulating gas, such as e.g. sulfur hexafluoride (SF₆), nitrogen (N₂), carbon monoxide (CO), or nitrous oxide (N₂O), although other gases (or mixtures thereof) may also be envisaged. The insulating gas may be a dielectric gas with a high dielectric strength, and in some embodiment have a high breakdown voltage relative to that of air (although it may be envisaged that air may also be used under favorable circumstances). The insulating gas may be provided already inside the container 110 at delivery of the system 100, or it may be filled inside the container 110 at a later stage, before operation. For this purpose, the container 110 may be equipped with a valve or similar (not shown). The container 110 may be sealed such that the insulating gas may not escape from the container 110 without additional help (such as by using e.g. a pump, or the opening of a valve). The container 110 may be of any suitable material (such as e.g. plastic or metal), and in particular of a material which does not react with the insulating gas located inside the container 110.

Inside the container 110, three high-voltage electrical devices 120 are arranged. The high-voltage electrical devices 120 may be converter cells for high-voltage direct-current (HVDC) conversion, but it may be envisaged that any type of high-voltage device that fits inside the container 110 may be used, e.g. a transformer, a switchgear, a circuit breaker, a substation or similar. The number of high-voltage devices may be different from three, as long as at least one device is present. If more than one device is present, all devices may be the same type of devices, or the devices may be of different types and have different functionalities within the system 100. A high-voltage electrical device 120 generally produces heat during operation. In for example a HVDC converter, heat may originate from e.g. power electronic valves, from switching current at high frequency and to some degree from e.g. bus bars or other conductors which generate heat as a result of having finite resistances. An electrical device 120 may have integrated means of cooling, such as e.g. fans or heat sinks, but it is assumed that the production of heat is large enough for such integrated means not to be sufficient enough on their own, and that additional cooling means are therefore required in order to remove the heat (and e.g. to transfer it to the outside of the container).

To provide cooling to the electrical devices 120, the system 100 includes a cooling medium conveyor that is arranged at least partially within the container 110. The cooling medium conveyor comprises a first pipe 130 for conveying a liquid cooling medium to and from the devices 120 in order to transfer heat away from the devices 120. Due to its low cost and high availability, the liquid cooling medium may advantageously be water (H₂O). It may also be envisaged that the liquid cooling medium may comprise other alternatives, such as e.g. de-ionized water, alcohol, oil, or mixtures thereof. The liquid cooling medium may have a high heat capacity in order to provide an improved (and possibly sufficient) cooling also when a large amount of heat is generated at the devices 120. In what follows, the liquid cooling-medium will be referred to as just "liquid", it being understood that the liquid also serves as a cooling medium.

The liquid enters the first pipe 130 from the outside of the container 110, after which it is conveyed and distributed by the first pipe 130 to the devices 120. With the expression "at least partially within", it is here meant that at least one part of the conveyor (e.g. one part of the first pipe 130) is located inside the container 110, but that one or many other parts of the conveyor (e.g. one or many other parts of the first pipe 130) may be on the outside of the container 110 (and e.g. be attachable to a supply of liquid, an arrangement for cooling of the liquid such as a heat exchanger, or similar).

After having picked up heat at the devices 120, the liquid is conveyed and collected from the devices 120 again by the first pipe 130 before it exists to the outside of the container 110 again. As a result, heat is transported away from the devices 120 and the devices 120 are cooled down such that they may operate properly. After exiting the container 110, the liquid may be re-circulated back to where it entered the container 110. Between exiting and entering the container 110, the liquid may pass through e.g. a heat-exchanger (not shown) in which it dissipates heat to e.g. the surrounding air in order to lower its temperature. It may also be envisaged that the liquid, after exiting the container 110, is instead disposed of and that new liquid is continuously re-supplied to the first pipe 130. If however the liquid is re-circulated, it may also be envisaged that the first pipe 130 is fully contained within the container 110, and that the liquid neither enters nor exits the container 110 during operation but are kept within the container 110. After being absorbed at and transferred away from the devices 120, the heat now in the liquid may be dissipated to an outside of the container 110 e.g. by a heat-exchanger (not shown).

The liquid may be provided already inside the first pipe 130 at delivery of the high-voltage system 100, or it may be filled at a later stage, before operation. For this purpose, the first pipe 130 may be equipped with a valve or similar (not shown). The first pipe 130 may also not include such a valve, but instead be connected to another device which in turn contains the valve.

The first pipe 130 may be formed from one or multiple pipes joined together with connections (joints) at junctions or where otherwise appropriate. With "pipe", it may be envisaged any structure which provides a duct in which liquid may be conveyed from one place to another, e.g. by the use of a pump. The pipes may have a circular cross-section but it may also be envisaged that pipes of other cross-sections (e.g. square, rectangular, triangular, etc.) may be used if necessary. The pipes may be made from plastic or from metal, and of such dimensions that sufficient volumes of liquid may be passed through them with reduced (and possibly minimal) risk of leakage or diffusion through the pipes. The pipes may be attached to the electrical devices 120 with the help of suitable fittings (not shown in figure 1a).

To prevent that liquid from the first pipe 130 comes into contact with the electrically insulating gas because of eventual leakage, the cooling medium conveyor includes a second pipe 140. The second pipe 140 is disposed around the first pipe, and arranged such that a channel is formed between the inside of the second pipe and the outside of the first pipe 130, a channel in which a ventilating gas may be contained. The second pipe 140 may be formed from one or multiple pipes that are disposed around the first pipe 130 throughout at least the interior of the container 110 and at least wherein the first pipe 130 would otherwise be exposed to the electrically insulating gas. As an example, it may be envisaged that a liquid cooling medium conveyor is formed by e.g. placing one pipe inside another pipe (i.e. one pipe is placed within the interior of another pipe). In such an example, the inner pipe would correspond to the first pipe 130 and the outer pipe would correspond to the second pipe 140.

At least a part of the first pipe 130 and the second pipe 140 may be arranged concentrically. Other arrangements may be envisaged, in which e.g. two pipes are not concentrically arranged, and/or in which one or both of the pipes are not cylindrical (or circular in terms of their cross-sections). The second pipe may be a single pipe, or formed from multiple sections of pipes that are joined using e.g. appropriate junctions and connectors, and such junctions and connectors may be adapted such that they also fit and cover junctions and connectors used to join the first pipe together (in case the first pipe is formed from multiple sections of pipes).

Although it is herein referred to as a ventilating gas, it will be appreciated that the gas contained in the channel (or space) formed between an outside of the first pipe and an inside of the second pipe may simply be referred to as "air". The term "ventilating" is used to differentiate the gas located within the channel from the gas located within the container (or chamber) without requiring any intrinsic property of the gas with respect to ventilation. It is the presence of the gas in the channel itself (and possibly circulation) that provides such ventilation.

The ventilating gas may be provided already inside the channel at delivery of the high-voltage system 100, or it may be filled at a later stage, before operation. For this purpose, the first pipe 130 and/or the second pipe 140 may be equipped with a valve or similar (not shown). The pipes 130 and/or 140 may also not include such a valve, but instead be connected to another device which in turn contains the valve.

One or both of the first and second pipes 130 and 140 may be rigid or flexible. The size of the cross-sections, the material or the dimensions of individual pipes may be adapted to fit a desired need for cooling capacity. As an example, a larger first pipe 130 may allow for larger volumes of liquid to be conveyed to and from a proximity of the devices 120, which may result in an improved cooling. In order for the first pipe 130 to fit within the second pipe 140, the second pipe 140 may be chosen accordingly. Likewise, circulation speed of both liquid and ventilating gas may be accounted for by dimensioning the pipes accordingly.

It will also be appreciated that in the present disclosure, when it is referred to the liquid cooling medium being conveyed (or brought) to and from the electrical devices, it is meant that the liquid cooling medium is brought in proximity to the electrical devices to obtain a thermal contact such that heat dissipated by the one or more electrical devices is transferred to the liquid for further dissipation. As such, the liquid cooling medium does not necessarily need to pass through the electrical devices.

In Figure 1a, flow of both liquid and ventilating gas is indicated by arrows. The ventilating gas flows in the same direction (i.e. the flow is unidirectional), and the system 100 is configured such that both liquid and ventilating gas pass through the devices 120. As such, the cooling liquid may for example temporarily leave the first pipe 130 and enter a device 120. The liquid may then be routed through the device 120 such that an improved (possibly optimal) heat absorption is provided, and later be returned to the first pipe 130 again such that the absorbed heat may be transferred away from the device with the liquid. If so is required, the device 120 may provide an internal link such that the ventilating gas may leave the second pipe 140, pass through the device 120, and then enter the second pipe 140 again e.g. at the same time as the liquid. Such an internal link is illustrated by the dashed lines (on the device 120) that e.g. connect the second pipe 140 together on both sides of a device 120. If not required for safety reasons, or other reasons, a device 120 may provide a link for the ventilating gas on its outside. The same applies to the liquid, which may be routed (not shown) also (or instead) on the exterior of the electrical device 120 (in e.g. a pipe wrapped as a coil around the device 120). It may also be envisaged (not shown) that the liquid never leaves the first pipe 130, and that the ventilating gas never leaves the channel between the first pipe 130 and the second pipe 140. Instead, the pipes themselves may e.g. wrap around the devices 120 such that heat may be transferred to the liquid and away from the devices 120. Such an embodiment may be advantageous in that no internal/external routing for cooling liquid and/or ventilating gas needs to be created in/on a device 120, although the creation of such links may provide more efficient heat absorption and cooling.

The cooling medium conveyor is herein arranged such that it is in thermal contact with the devices 120. With "thermal contact", it is meant that the arrangement is such that heat may be transferred in at least one direction between the cooling medium conveyor and a device, either through physical contact or through liquid conveyed to/from a device 120 by the cooling medium conveyor.

In Figure 1a, the system 100 is further provided with a fan 150 for circulating the ventilating gas. The fan may be optional. It may also be envisaged that the second pipe 140 is such that it at one or more points enters and exists the container 110, or that the container 110 is provided with one or more interfaces through which at least the ventilating gas is allowed to enter and exit the container. In such situations, the fan 150 may be located at the outside of the container 110. It may also be envisaged that several fans 150 are included, e.g. to increase circulation speed and/or the volume of ventilating gas that may be circulated.

The system 100 in figure 1a further includes an optional device 160 that is located such that it has access to the second pipe 140 (with "access" it is envisaged that the additional device 160 has access at least to the ventilating gas, i.e. the optional device may be located at the outside or inside of the container 110 depending on the specifications of the container and/or the second pipe 140 forming part of the cooling medium conveyor). Having access to the ventilating gas, the optional device 160 may in some embodiments of the high-voltage system 100 comprise e.g. a humidity measurement system. The humidity measurement system may be configured to measure a humidity value within the channel (e.g. the humidity content of the ventilating gas), and output a signal that is indicative of the measured humidity value. The signal may be an acoustical, optical, electrical, optical or any other suitable signal. The signal may be further used by other systems, such as e.g. a leakage warning system that may use the signal to trigger an alarm or output an alarm signal (such as e.g. an optical, electrical or mechanical signal) in case the measured humidity value exceeds a threshold value. An increased humidity within the channel may indicate that a leakage of liquid has occurred, and the direct link between the moisture-source (i.e. the leak) and the detection system may provide faster and more sensitive detection of leakage than in a system where e.g. a change in cooling-liquid pressure, temperature or similar is used as an indicator, or instead of waiting for an actual portion of the leaked liquid to be transferred to where it may be detected (e.g. by visual inspection).

The optional device 160 may in some embodiments additionally, or alternatively, comprise e.g. a moisture removal system. The moisture removal system may be arranged to remove moisture contained e.g. in humid ventilating gas. The moisture removal system may achieve this by using e.g. evaporation, suction, various filters or similar. By similar means, if the moisture removal system is also in contact with the second pipe, the moisture removal system may also serve to remove liquid that may be found within the pipe and not absorbed by the ventilating gas. In some embodiments, the signal indicative of the humidity value (as measured by the humidity measurement system) may be output to the moisture removal system. The moisture removal system may then be configured to start removing moisture in the event that the humidity value exceeds a threshold value. By doing so, moisture can automatically be removed from the channel.

An alternative embodiment of a high-voltage system 101 is illustrated in figure 1b. In contrast to the system 100 illustrated in figure 1a, the cooling medium conveyor (that comprises the first pipe 130 and the second pipe 140) is in figure 1b arranged such that the ventilating gas turns into the opposite direction when reaching the devices 120. The channel of the cooling medium conveyor is partitioned by a spacer arrangement (not shown in the figure) into two subchannels. The ventilating gas may arrive at the devices 120 in e.g. one subchannel (i.e. a partition of the channel formed between the first and second pipes 130 and 140), and return back through another subchannel (i.e. another partition of the channel). It is envisaged that devices already fitted with internal routings only for liquid may be used in the system 101 without modification, since the ventilating gas is not required to pass through (or pass by) the devices 120.

In the figure, an additional circulating fan 152 is included. The fan 150 circulates the air in the part of the channel that surrounds the incoming liquid, while the additional fan 152 circulates the air in the other part of the channel that surrounds the outgoing liquid. It may also be envisaged that a single fan may be responsible for circulating the ventilating gas in all of the channel, or that more than two fans may be used if so is required to achieve a desired speed and volume of circulating ventilating gas.

In the figure, the fan 150 and the cooling medium conveyor are arranged such that the ventilating gas in two different subchannels is circulated in opposite directions.

It may also be envisaged that the high-voltage system 101 includes an optional device (not shown) similar or equal to the optional device 160 included in the high-voltage system 100 described with reference to figure 1a.

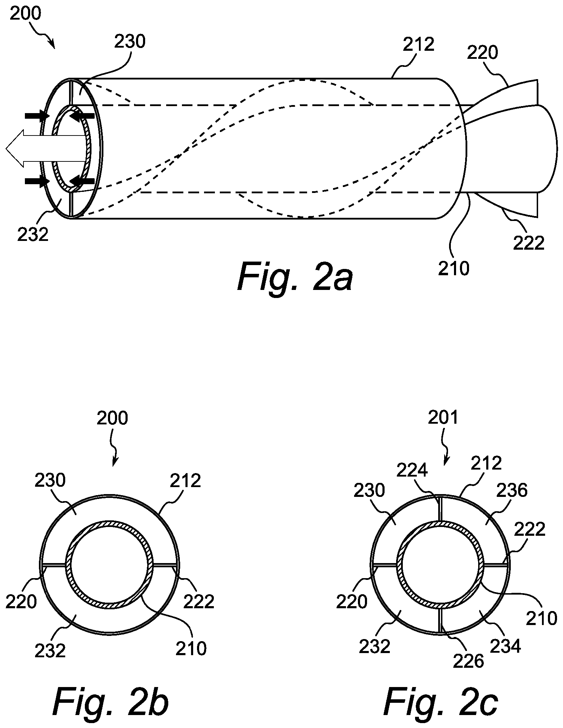

With reference to figures 2a-2c, embodiments of cooling medium conveyors in accordance with the present disclosure will now be described.

Figure 2a is a perspective view of a section of a cooling medium conveyor 200. In the section, a first pipe 210 is concentrically surrounded by a second pipe 212 (disposed around the first pipe 210). The first pipe 210 may convey a liquid in a first direction as indicated by the large, unfilled arrow. Optionally, between the first pipe 210 and the second pipe 212, a spacer arrangement comprising two spacers 220 and 222 may be arranged. The spacers 220 and 222 may twist around the first pipe 210 in a helical fashion. The spacers 220 and 222 may keep the first pipe 210 and the second pipe 212 at a fixed distance from each other. By twisting the spacers 220 and 222 around the first pipe 210, improved fixation and distance-keeping may be achieved. It may also be envisaged that the spacers 220 and 222 do not twist and are arranged in a straight fashion, or that the spacers 220 and 222 twist in another fashion.

The spacers 220 and 222 partition the channel formed between the first pipe 210 and the second pipe 212 into two subchannels 230 and 232. If the subchannels are separated from each other by the spacers 220 and 222, a ventilating gas that is contained within the channel may be conveyed in different directions within each of the subchannels 230 and 232 (as illustrated by the small, filled arrows). As illustrated in figure 2a, the ventilating gas may e.g. be conveyed (and circulated) in the subchannel 230 in a direction similar to the first direction in which the fluid is conveyed by the first pipe 210. Meanwhile, the ventilating gas in the other subchannel 232 may be conveyed (and circulated) in a direction opposite to that of the direction of the subchannel 230. Such a cooling medium conveyor may be used in a system 101 as illustrated in figure 1b, a system 101 in which the ventilating gas turns into the opposite direction when reaching a high-voltage electrical device that is to be cooled.

It may also be envisaged that the spacer arrangement may be formed such that it still supports the first and second pipes, but that no partitioning of the channel is performed. As an example, such a setup may be achieved by only using one of the spacers 220 and 222.

At least a section of the cooling medium conveyor, comprising the first and second pipes, and including the spacer arrangement, may also be formed as one part. As an example, the first pipe 210, the second pipe 220 and the spacers 220 and 222 may be formed as one part. Such a one part may be manufactured by using methods of extrusion and/or drawing, e.g. processes in which a material is pushed (or drawn) through a die having a desired cross-section. It may also be envisaged that that such a one part is fabricated using other, or additional, suitable methods such as three-dimensional printing.

Figure 2b illustrates a cross-section of the cooling medium conveyor 200. A channel is formed between an outside of the first pipe 210 and an inside of the second pipe 212. The two spacers 220 and 222 separate the two pipes and keep them in position, and partition the channel into the subchannels 230 and 232. If the section is rotated such that the subchannel 232 is located below the subchannel 230, it may be envisaged that an eventual leakage would cause the liquid to arrive only in the lower subchannel 232. If, for example, ventilating gas is circulated in opposite directions in the two subchannels, it may be envisaged that such an arrangement could be used to an advantage since e.g. sensors for leakage detection (or humidity measurement) could be concentrated to the lower subchannel 232, or that sensors for actual liquid could be concentrated to the lower subchannel 232 while sensors for e.g. humidity and moisture in gas could be concentrated to the upper subchannel 230. Likewise, by measuring e.g. the humidity and moisture in both of the subchannels 230 and 232 separately, it could more easily be determined in what part of the first pipe 210 (upper or lower part) it is that the leak has more likely occurred. The same may be true if the section is turned such that the subchannel 230 is situated to the right (or left) of the subchannel 232, etc.

Figure 2c illustrates a cross-section of a section of a different embodiment of a cooling medium conveyor 201. In the figure, two additional spacers 224 and 226 are included, and the channel between the pipes 210 and 212 is partitioned into a total of four subchannels 230, 232, 234 and 236. By using many spacers, improved separation between the first and second pipes 210 and 212 may be achieved. Also, by positioning multiple sensors for e.g. humidity and moisture detecting in each (or many) of the subchannels, finding the position (and e.g. the type) of an eventual leak may be facilitated.

If the second pipe is only required to contain a gas, and possibly a minor amount of leakage liquid, the demands on the second pipe (e.g. material thickness, quality, integrity, etc.) may be relaxed. As an example, the thickness of a second pipe 220 may be thinner than the thickness of a first pipe 210. Also, as the second pipe provides additional safety, the demands on the first pipe (such as e.g. material thickness, quality, integrity, etc.) may also be relaxed.

The ventilating gas may be selected to tolerate contact with some liquid eventually leaking from the first pipe. The ventilating gas may be of equal, or different, pressure compared to the insulating gas. The ventilating gas may e.g. have a lower pressure than the insulating gas, such that the risk of liquid escaping from the first pipe and also through the second pipe may be reduced. The ventilating gas and the electrically insulating gas may be of a same type, such that e.g. a problem of incompatibility may be reduced or avoided in case the ventilating gas leaks out from the second pipe. It may also be envisaged that the ventilating gas and the electrically insulating gas may be of a different type. As an example, it may be envisaged that the ventilating gas is compatible with the electrically insulating gas and also with the liquid, even if the ventilating gas may not have the same electrically insulating properties as the electrically insulating gas.

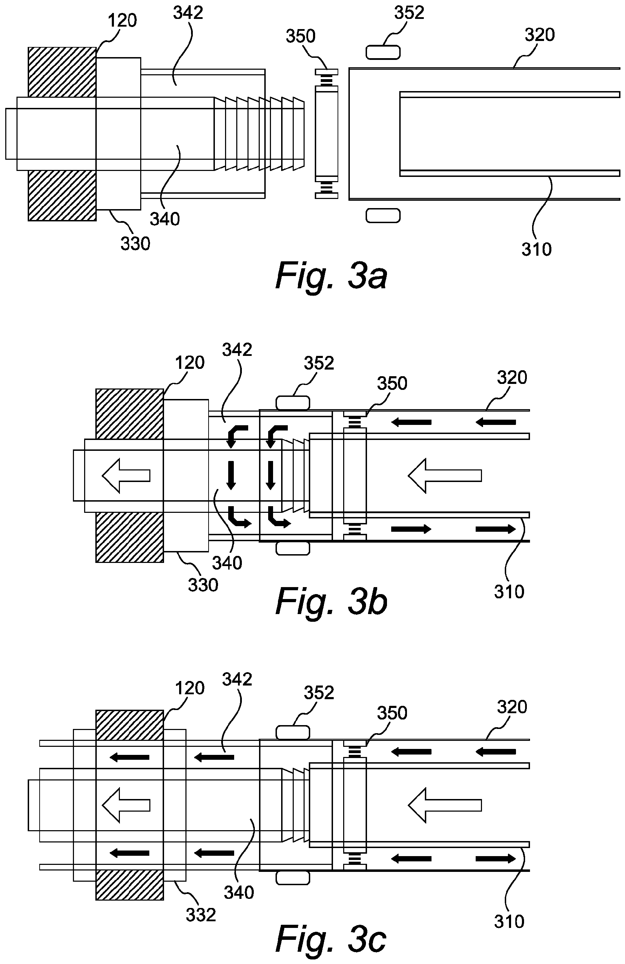

With reference to figures 3a, 3b and 3c, example embodiments of fittings that may be used to connect e.g. a cooling medium connector to high-voltage devices will now be described.

In figure 3a, a fitting 330 is illustrated. The fitting 330 is attached to the wall of an electrical device 120. The fitting 330 comprises a primary chamber 340 and a secondary chamber 342. The primary chamber 340 extends through the wall of the electrical device 120, and has an outer structure that at one end may attach to the first pipe 310 of a cooling medium conveyor with the help of primary attachment means 350. The secondary chamber 342 is terminated such that it stops at the wall, and has an outer structure that may attach to the second pipe 320 (that is disposed around the first pipe 310) by the help of secondary attachment means 352. The primary and secondary attachment means 350 and 352 may be selected to fit the type of pipes that are used, and may be e.g. clamps, twist-locks or other suitable fastening means. The primary attachment means 350 (and/or the secondary attachment means 352) may be a separate part (as indicated), or be an integrated part of the fitting 330.

The first pipe 310 may be secured to the primary chamber 340 of the fitting 330 such that a liquid conveyed in the first pipe 310 may pass through the fitting 330 and enter (or exit) the electrical device 120. The second pipe 320 may be secured to the secondary chamber 342 of the fitting 330 such that the ventilating gas contained within the channel (defined between the first and second pipes 310 and 320) may be prevented from passing through the fitting. If the channel is partitioned by a spacer arrangement into two or more subchannels, the fitting 330 is such that the ventilating gas may change its direction at the fitting 330. For example, if the ventilating gas arrives at the fitting through one subchannel, the gas may move through the secondary chamber 342 of the fitting 330 and return back through another subchannel. The flow of liquid and ventilating gas through/in the fitting 330 is illustrated by the unfilled and filled arrows in the figure, respectively. A fitting as illustrated in figures 3a and 3b may serve as a fitting when connecting the first pipe 130 and the second pipe 140 (of the cooling medium conveyor) to electrical devices 120 in the system 101, as illustrated in figure 1b.

Figure 3c illustrates an alternative fitting 332, wherein the secondary chamber 342 extends through the wall of the electrical device 120. By using the fitting 332, ventilating gas may pass through the fitting 332 and may enter (or exit) the electrical device 120. The flow of liquid and ventilating gas is illustrated by the unfilled and filled arrows in the figure, respectively. A fitting as illustrated in figure 3c may serve as a fitting in the system 100 illustrated in figure 1a, wherein the direction of the flow of ventilating gas remains unchanged.

The present disclosure may find applications in e.g. high-voltage systems (such as in transformers, stacks of converter cells, switchgear, or similar), especially in systems in which one or more high-voltage electrical components are surrounded with insulating gas in order to provide proper electrical insulation (such as e.g. to reduce or eliminate the risk of arcs forming between devices or between devices and ground). Due to the insulating gas, traditional water cooling may not be useable. The present disclosure offers the solution of using a double-pipe structure to reduce the risk of cooling medium (e.g. water) coming into contact with the insulating gas in the event of e.g. a leakage from a pipe. As a result, water cooling may still be provided even in the presence of the insulating gas, and high-voltage systems may thereby be confined and have smaller dimensions than what would otherwise be possible if alternative methods of cooling (such as e.g. forced and convective gas cooling) were used. Phrased differently, the present disclosure offers the benefits of water cooling with a reduced risk.

Although features and elements are described above in particular combinations, each feature or element may be used alone without the other features and elements or in various combinations with or without other features and elements.

Additionally, variations to the disclosed embodiments may be understood and effected by the skilled person in practicing the claimed invention, from a study of the drawings, the disclosure, and the appended claims. In the claims, the word "comprising" does not exclude other elements, and the indefinite article "a" or "an" does not exclude a plurality. The mere fact that certain features are recited in mutually different dependent claims does not indicate that a combination of these features cannot be used to advantage.

## Claims

1. A high voltage system (100) comprising:
a container (110) for enclosing an electrically insulating gas;
an electrical device (120) arranged within the container (110); and
a cooling medium conveyor (200) arranged at least partially within the container, **characterized by** said conveyor comprising:
a first pipe (130, 210) for conveying a liquid cooling medium, and
a second pipe (140, 212) disposed around the first pipe (130, 210) such that a channel for containing a ventilating gas is formed between an outside of the first pipe (130, 210) and an inside of the second pipe (140, 212),
wherein the conveyor is arranged in thermal contact with said electrical device (120).

2. The system (100) of claim 1, wherein the cooling medium conveyor (200) further comprises a spacer arrangement (220, 222) between the first pipe (130, 210) and the second pipe (140, 212).

3. The system (100) of claim 2, wherein the spacer arrangement partitions at least part of the channel into at least two subchannels (230, 232, 234, 236).

4. The system (100) of any of the preceding claims, further comprising a fan (150, 152) arranged to cause circulation of a ventilating gas contained within the channel.

5. The system (100) of claim 4, wherein the fan (150, 152) and the cooling medium conveyor (200) are arranged such that the circulation of the ventilating gas is unidirectional.

6. The system (100) of claim 4 when depending on claim 3, wherein the cooling medium conveyor (200) and the fan (150, 152) are arranged such that the ventilating gas in two of the at least two subchannels (230, 232, 234, 236) is circulated in opposite directions.

7. The system (100) of any one of the preceding claims, further comprising a humidity measurement system configured to measure a humidity value within the channel to output a signal indicative of said humidity value.

8. The system (100) of any one of the preceding claims, further comprising a moisture removal system configured to remove moisture from the channel.

9. The system (100) of claims 7 and 8, wherein the signal indicative of the humidity value is output to the moisture removal system, and wherein the moisture removal system is configured to start removing moisture in the event that the humidity value exceeds a threshold value.

10. The system (100) of any one of the preceding claims, wherein the cooling medium conveyor (200) is arranged to transfer heat to the outside of the container (110).

11. The system (100) of any one of the preceding claims, wherein the first pipe (130, 210) and the second pipe (140, 212) are coaxial.

12. The system (100) of any one of the preceding claims, wherein the electrical device (120) is one of a transformer, a circuit breaker, a switchgear, or a converter.

13. The system of claim 2, where the first pipe (130, 210), the second pipe (140, 212) and the spacer arrangement (220, 222) are formed as one part.

14. A method for cooling an electrical device (120) arranged within a container (110) that encloses an electrically insulating gas, the method comprising:
arranging, at least partially within the container (110), a cooling medium conveyor (200),
**characterized by**
the cooling medium conveyor (200) comprising a first pipe (130, 210) and a second pipe (140, 212), wherein the second pipe (140, 212) is disposed around the first pipe (130, 210) such that a channel is formed between an outside of the first pipe (130, 210) and an inside of the second pipe (140, 212);
providing a ventilating gas within the channel; and
causing a liquid cooling medium to flow within the first pipe (130, 210) to transfer heat away from the electrical device (120).

15. The method of claim 14, wherein the ventilating gas and the electrically insulating gas are of a same type.

## Patentansprüche

1. Hochspannungsanlage (100), die Folgendes umfasst:
einen Behälter (110) zum Einschließen eines elektrisch isolierenden Gases;
eine elektrische Vorrichtung (120), angeordnet im Behälter (110); und
einen Kühlmediumförderer (200), zumindest teilweise im Behälter angeordnet, **dadurch gekennzeichnet, dass** der Förderer Folgendes umfasst:
eine erste Leitung (130, 210) zum Fördern eines flüssigen Kühlmediums, und
eine zweite Leitung (140, 212), angeordnet rund um die erste Leitung (130, 210), sodass ein Kanal zum Enthalten eines Belüftungsgases zwischen einer Außenseite der ersten Leitung (130, 210) und einer Innenseite der zweiten Leitung (140, 212) gebildet wird,
wobei der Förderer in thermischem Kontakt mit der elektrischen Vorrichtung (120) angeordnet ist.

2. Anlage (100) nach Anspruch 1, wobei der Kühlmediumförderer (200) ferner eine Abstandhalteranordnung (220, 222) zwischen der ersten Leitung (130, 210) und der zweiten Leitung (140, 212) umfasst.

3. Anlage (100) nach Anspruch 2, wobei die Abstandhalteranordnung zumindest einen Teil des Kanals in mindestens zwei Unterkanäle (230, 232, 234, 236) unterteilt.

4. Anlage (100) nach einem der vorhergehenden Ansprüche, ferner umfassend ein Gebläse (150, 152), angeordnet, um eine Zirkulation des innerhalb des Kanals enthaltenen Belüftungsgases zu veranlassen.

5. Anlage (100) nach Anspruch 4, wobei das Gebläse (150, 152) und der Kühlmediumförderer (200) so angeordnet sind, dass die Zirkulation des Belüftungsgases unidirektional ist.

6. Anlage (100) nach Anspruch 4, wenn abhängig von Anspruch 3, wobei der Kühlmediumförderer (200) und das Gebläse (150, 152) so angeordnet sind, dass das Belüftungsgas in zwei der mindestens zwei Unterkanäle (230, 232, 234, 236) in entgegengesetzte Richtungen zirkuliert wird.

7. Anlage (100) nach einem der vorhergehenden Ansprüche, ferner umfassend ein Feuchtigkeitsmesssystem, ausgelegt zum Messen eines Feuchtigkeitswertes innerhalb des Kanals zum Ausgeben eines Signals, das indikativ für den Feuchtigkeitswert ist.

8. Anlage (100) nach einem der vorhergehenden Ansprüche, ferner umfassend ein Feuchtigkeitsentfernungssystem, ausgelegt zum Entfernen von Feuchtigkeit aus dem Kanal.

9. Anlage (100) nach Ansprüchen 7 und 8, wobei das Signal, das indikativ für den Feuchtigkeitswert ist, an das Feuchtigkeitsentfernungssystem ausgegeben wird, und wobei das Feuchtigkeitsentfernungssystem dazu ausgelegt ist, mit dem Entfernen von Feuchtigkeit in dem Fall zu beginnen, dass der Feuchtigkeitswert einen Schwellenwert überschreitet.

10. Anlage (100) nach einem der vorhergehenden Ansprüche, wobei der Kühlmediumförderer (200) angeordnet ist, um Wärme zur Außenseite des Behälters (110) zu transportieren.

11. Anlage (100) nach einem der vorhergehenden Ansprüche, wobei die erste Leitung (130, 210) und die zweite Leitung (140, 212) koaxial sind.

12. Anlage (100) nach einem der vorhergehenden Ansprüche, wobei die elektrische Vorrichtung (120) eines aus einem Transformator, einem Unterbrecher, einem Schaltgerät oder einem Wandler ist.

13. Anlage nach Anspruch 2, wobei die erste Leitung (130, 210), die zweite Leitung (140, 212) und die Abstandhalteranordnung (220, 222) als ein Teil ausgebildet sind.

14. Verfahren zum Kühlen einer elektrischen Vorrichtung (120), angeordnet in einem Behälter (110), der ein elektrisch isolierendes Gas einschließt, wobei das Verfahren Folgendes umfasst:
Anordnen, zumindest teilweise in dem Behälter (110),
eines Kühlmediumförderers (200),
**dadurch gekennzeichnet, dass**
der Kühlmediumförderer (200) eine erste Leitung (130, 210) und eine zweite Leitung (140, 212) umfasst, wobei die zweite Leitung (140, 212) rund um die erste Leitung (130, 210) angeordnet ist, sodass ein Kanal zwischen einer Außenseite der ersten Leitung (130, 210) und einer Innenseite der zweiten Leitung (140, 212) gebildet wird;
Bereitstellen eines Belüftungsgases innerhalb des Kanals; und
Veranlassen, dass ein flüssiges Kühlmedium in der ersten Leitung (130, 210) fließt, um Wärme weg von der elektrischen Vorrichtung (120) zu transportieren.

15. Verfahren nach Anspruch 14, wobei das Belüftungsgas und das elektrisch isolierende Gas von einem gleichen Typ sind.

## Revendications

1. Système haute tension (100) comprenant :
un récipient (110) pour renfermer un gaz électriquement isolant ;
un dispositif électrique (120) disposé à l'intérieur de ce récipient (110) ; et
un transporteur d'agent de refroidissement (200) disposé au moins partiellement à l'intérieur du récipient, **caractérisé en ce que** ledit transporteur comprend :
un premier tuyau (130, 210) pour transporter un agent de refroidissement liquide, et
un deuxième tuyau (140, 212) disposé autour du premier tuyau (130, 210) de manière à ce qu'une voie pour contenir un gaz de ventilation soit formée entre un extérieur du premier tuyau (130, 210) et un intérieur du deuxième tuyau (140, 212),
ce transporteur étant disposé en contact thermique avec ledit dispositif électrique (120).

2. Système (100) selon la revendication 1, dans lequel transporteur d'agent de refroidissement (200) comprend en outre un agencement d'espacement (220, 222) entre le premier tuyau (130, 210) et le deuxième tuyau (140, 212).

3. Système (100) selon la revendication 2, dans lequel l'agencement d'espacement cloisonne au moins une partie de la voie en au moins deux voies secondaires (230, 232, 234, 236).

4. Système (100) selon l'une quelconque des revendications précédentes, comprenant en outre un ventilateur (150, 152) agencé de façon à entraîner la circulation d'un gaz de ventilation à l'intérieur de la voie.

5. Système (100) selon la revendication 4, dans lequel le ventilateur (150, 152) et le transporteur d'agent de refroidissement (200) sont disposés de manière à ce que la circulation du gaz de ventilation soit unidirectionnelle.

6. Système (100) selon la revendication 4 lorsqu'elle dépend de la revendication 3, dans lequel le transporteur d'agent de refroidissement (200) et le ventilateur (150, 152) sont disposés de manière à ce que le gaz de ventilation dans deux des au moins deux voies secondaires (230, 232, 234, 236) circule dans des directions opposées.

7. Système (100) selon l'une quelconque des revendications précédentes, comprenant en outre un système de mesure d'humidité configuré de façon à mesurer une valeur de teneur en humidité à l'intérieur de la voie pour fournir un signal indicatif de ladite valeur de teneur en humidité.

8. Système (100) selon l'une quelconque des revendications précédentes, comprenant en outre un système de suppression d'humidité configuré de façon à supprimer l'humidité de la voie.

9. Système (100) selon les revendications 7 et 8, dans lequel le signal indicatif de la valeur de teneur en humidité est fourni au système de suppression d'humidité, et dans lequel le système de suppression d'humidité est configuré de façon à commencer à supprimer l'humidité dans le cas où la valeur de teneur en humidité dépasse une valeur de seuil.

10. Système (100) selon l'une quelconque des revendications précédentes, dans lequel le transporteur d'agent de refroidissement (200) est agencé de façon à transférer de la chaleur à l'extérieur du récipient (110) .

11. Système (100) selon l'une quelconque des revendications précédentes, dans lequel le premier tuyau (130, 210) et le deuxième tuyau (140, 212) sont coaxiaux.

12. Système (100) selon l'une quelconque des revendications précédentes, dans lequel le dispositif électrique (120) est soit un transformateur, soit un disjoncteur, soit un appareillage de commutation, soit un convertisseur.

13. Système selon la revendication 2, dans lequel le premier tuyau (130, 210), le deuxième tuyau (140, 212) et l'agencement d'espacement (220, 222) sont formés d'une seule pièce.

14. Procédé pour refroidir un dispositif électrique (120) disposé à l'intérieur d'un récipient (110) qui renferme un gaz électriquement conducteur, ce procédé comprenant :
la disposition, au moins partiellement à l'intérieur du récipient (110), d'un transporteur d'agent de refroidissement (200),
**caractérisé en ce que**
le transporteur d'agent de refroidissement (200) comporte un premier tuyau (130, 210) et un deuxième tuyau (140, 212), ce deuxième tuyau (140, 212) étant disposé autour du premier tuyau (130, 210) de manière à ce qu'une voie soit formée entre un extérieur du premier tuyau (130, 210) et un intérieur du deuxième tuyau (140, 212) ;
la fourniture d'un gaz de ventilation à l'intérieur de la voie ; et
la prévision de l'écoulement d'un agent de refroidissement liquide à l'intérieur du premier tuyau (130, 210) afin de transférer de la chaleur pour l'enlever du dispositif électrique (120).

15. Procédé selon la revendication 14, dans lequel le gaz de ventilation et le gaz électriquement isolant sont du même type.
